# EUROPÄISCHE PATENTSCHRIFT

(11) **EP 1 527 138 B1**
(45) Veröffentlichungstag und Bekanntmachung des Hinweises auf die Patenterteilung: **26.09.2007**
(21) Anmeldenummer: 03766216.0
(22) Anmeldetag: 18.07.2003
(51) Int. Cl.: C08L 69/00, C08K 5/00

(54) **FLAMMWIDRIGE POLYCARBONAT-FORMMASSEN**
FLAME-RESISTANT POLYCARBONATE MOULDING COMPOUNDS
MATIERES DE MOULAGE IGNIFUGES A BASE DE POLYCARBONATE

(30) Priorität: 29.07.2002 DE 10234420; 21.11.2002 DE 10254549
(43) Veröffentlichungstag der Anmeldung: 04.05.2005
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE); WITTMANN, Dieter, 51375 Leverkusen (DE); KURZIDIM, Dirk, 50259 Pulheim (DE)
(86) Internationale Anmeldenummer: PCT/EP2003/007826
(87) Internationale Veröffentlichungsnummer: WO 2004/013229

(56) Entgegenhaltungen:
- EP-A- 0 761 746
- EP-A- 0 933 396
- EP-A- 1 142 957

## Beschreibung

Die vorliegende Erfindung betrifft schlagzähmodifizierte Polycarbonat-Zusammensetzungen, die sich durch eine Kombination aus verbesserter Schmelzefließfähigkeit, Chemikalienbeständigkeit und Kriechfestigkeit auszeichnen. Die Zusammensetzungen besitzen darüber hinaus eine gute Zähigkeit, Hydrolysebeständigkeit und Verarbeitungsstabilität. Bevorzugt betrifft die Erfindung flammwidrige Zusammensetzungen.

An Gehäusematerialien von Geräten der Informationstechnologie wie beispielsweise Drucker, Kopierer, Notebooks, Monitore, Mobiltelefone etc. werden heute von den Herstellern zunehmende Anforderungen gestellt. In vielen Fällen ist hier eine Flammschutzausrüstung erforderlich. Der Forderung nach Materialien mit halogenfreier Flammschutzausrüstung kommen insbesondere PC+ABS-Blends nach, die mit organischen Phosphorsäureestern flammwidrig ausgerüstet sind. Zu solchen Zusammensetzungen gibt es einen umfangreichen Stand der Technik. Beispielhaft seien genannt die EP-A 0 345 522, EP-A 0 640 655 und EP 0 363 608. Aus solchen Zusammensetzungen hergestellte Formkörper zeigen eine gute Kombination anwendungstechnischer Eigenschaften, wie eine gute Zähigkeit, hohe Wärmeformbeständigkeit und ein für viele Applikationen zufriedenstellendes Verarbeitungsverhalten, jedoch in der Regel nur innerhalb eines begrenzten Verarbeitungsfensters.

In jüngerer Zeit werden zunehmende Anforderungen an die Chemikalien- und Hydrolysebeständigkeit sowie das Spritzgussverhalten und die Verarbeitungsstabilität, d.h. die Eigenschaftskonstanz bei erhöhten Verarbeitungstemperaturen solcher Formmassen gestellt. Diese Anforderungen werden von solchen mit organischen Phosphorsäureestern, insbesondere mit oligomeren Phosphaten flammwidrig ausgerüsteten PC/ABS-Zusammensetzungen erfüllt, die als ABS-Komponente ein im Masse-Polymerisationsverfahren hergestelltes ABS enthalten. Auch derartige Zusammensetzungen sind in der Patentliteratur bereits beschrieben.

So werden in EP-A 0 755 977 PC+ABS-Blends mit ABS niedrigen Kautschukgehalts, vorzugsweise Masse-ABS, und niedrigem Flammschutzmittelgehalt beschrieben. Die nötige Schmelzefließfähigkeit wird in diesen Formmassen erzielt durch Einsatz von Polycarbonat mit relativ niedrigem Molekulargewicht, in bevorzugtester Weise mit einem gewichtsgemittelten Molekulargewicht von <25,000 g/mol, wodurch die Spannungsrissbeständigkeit begrenzt wird. Eine für viele jedoch nicht alle Anwendungen ausreichende Kombination aus Spannungsrissbeständigkeit und Flammwidrigkeit wird nur bei Beschränkung des Flammschutzmittel- und Kautschukanteils erhalten. Die heutigen gesteigerten Anforderungen an die Schmelzefließfähigkeit, die Flammwidrigkeit und die Spannungsrissbeständigkeit werden von solchen Zusammensetzungen nicht mehr erfüllt. Bei Einsatz höhermolekularen Polycarbonats verbessert sich zwar die Spannungsrissbeständigkeit, jedoch wird die Schmelzefließfähigkeit weiter reduziert. Bei Einsatz höherer Flammschutzmittelmengen werden zwar die Fließfähigkeitsanforderungen erfüllt, jedoch kommt es zu einer Verschlechterung der Chemikalienbeständigkeit.

In der EP-A 0 933 396 werden Polycarbonatabmischungen mit Masse-ABS beschrieben, die mit Oligophosphaten flammwidrig ausgerüstet sind und sich durch eine gute Kerbschlagzähigkeit, Hydrolysebeständigkeit und eine bessere Verarbeitungsstabilität auszeichnen. Für viele Anwendungen weisen die in dieser Anmeldung beschriebenen Formmassen jedoch insbesondere ein Defizit in der Flammwidrigkeit und Bindenahtfestigkeit auf.

In der JP-A 11 302 523 werden Zusammensetzungen aus Polycarbonat, Masse-ABS, Emulsions-ABS und einem Acrylnitril-Vinyl-Copolymer beschrieben, die mit Monophosphaten und Polytetrafluorethylen (PTFE) flammwidrig ausgerüstet sind. Diese Formmassen zeigen ein unzureichendes Verarbeitungsfenster, da sie bei höheren Verarbeitungstemperaturen zur Phasenagglomeration neigen, was zur Verschlechterung der mechanischen Eigenschaften führt, und das Flammschutzadditiv ausblutet.

Weiterhin weisen derartige Zusammensetzungen erfahrungsgemäß eine unzureichende Hydrolysebeständigkeit auf.

In der DE 198 53 105 A1 werden ebenfalls Zusammensetzungen enthaltend Polycarbonat, Masse-ABS, welches in bevorzugter Weise in Kombination mit Emulsions-ABS eingesetzt wird, und Phosphorsäureester beschrieben. Die Formmassen gemäß der in der DE 198 53 105 A1 beschriebenen Zusammensetzungen zeigen insbesondere eine unzureichende Fließfähigkeit, Chemikalien- und Hydrolysebeständigkeit und ein schlechtes Zeitstandverhalten.

EP-A 1 026 205 beschreibt Formmassen aus Polycarbonat, ABS-Pfropfpolymerisaten, bevorzugt hergestellt im Masse-Polymerisationsverfahren, monomeren oder oligomeren Phosphorsäureestern und silikatischen Verstärkungsstoffen, die dadurch gekennzeichnet sind, dass der Chlorgehalt der Zusammensetzung nicht größer als 100 ppm ist. Ebenfalls beschrieben werden solche Zusammensetzungen, die als weitere Komponente Acrylat-basierende Pfropfpolymerisate mit Kem-Schale-Struktur enthalten. Die in dieser Anmeldung beschriebenen Formmassen zeichnen sich durch eine exzellente Hydrolysebeständigkeit aus, weisen aber aufgrund des niedrigen Molekulargewichts des eingesetzten Polycarbonats in der Regel eine schlechte Chemikalienbeständigkeit und ein unzureichendes Zeitstandverhalten auf. Das niedrige Molekulargewicht ist jedoch erforderlich, um in den hier beschriebenen Zusammensetzungen eine ausreichende Schmelzfließfähigkeit der Formmasse zu erzielen. Mit dem hier eingesetzten Masse-ABS ist ein ausreichendes Fließfähigkeit-Niveau bei Verwendung höhermolekularen Polycarbonats nicht zu erzielen. Ähnliches gilt auch für die Formmassen, die in der WO 00/39210 beschrieben werden und sich dadurch auszeichnen, dass sie als FR-Additiv ein Bisphenol A-verbrücktes Oligophosphat mit niedriger Säurezahl enthalten.

In der US-A 5,849,827 werden flammwidrige Zusammensetzungen aus Polycarbonat und Emulsions-ABS beschrieben, die neben konventionellen Flammschutzadditiven feinstteilige anorganische Partikel enthalten und sich durch eine verbesserte Flammwidrigkeit auszeichnen. Positive Auswirkungen der Partikel auf die Schmelzefließfähigkeit und die Hydrolysebeständigkeit der Formmassen werden in dieser Anmeldung nicht beschrieben.

Aufgabe der vorliegenden Erfindung war es Polycarbonat-Zusammensetzungen bereitzustellen, die sich insbesondere durch eine Kombination aus exzellenter Spannungsrissbeständigkeit und Kriechfestigkeit bei verbesserter Schmelzefließfähigkeit auszeichnen und die darüber hinaus über ein hohes Maß an Zähigkeit, Verarbeitungsstabilität und Hydrolysebeständigkeit verfügen. Insbesondere war es Aufgabe der Erfindung, solche flammwidrigen Zusammensetzungen bereitzustellen, aus denen Formkörper hergestellt werden können, die den UL94V-Test bei 1,5 mm Wandstärke mit der Bewertung V-0 bestehen und bei denen das Flammschutzadditiv unter den üblichen Verarbeitungsbedingungen nicht in nennenswertem Umfang ausblutet.

Es wurde gefunden, dass solche Zusammensetzungen, die Polycarbonat mittleren Molekulargewichts, ein spezielles, über Massepolymerisationsverfahren hergestelltes ABS-Pfropfpolymerisat, sowie optional mindestens eine weitere Komponente ausgewählt aus oligomeren organischen Phosphorsäureestern, feinstteiligen anorganischen Partikel, Acrylat-haltige Polymere sowie fluorierte Polyolefine enthalten, die gewünschten Eigenschaften aufweisen.

Gegenstand der vorliegenden Erfindung sind daher Zusammensetzungen enthaltend
A) 40 bis 95 Gew.-Teile, bevorzugt 50 bis 80 Gew.-Teile, insbesondere 60 bis 80 Gew.-Teile aromatisches Polycarbonat oder Polyestercarbonat oder Mischungen hieraus mit einem gewichtsgemittelten Molekulargewicht M̅_{W} von 25,000 bis 35,000, bevorzugt von 26,000 bis 33,000, insbesondere von 26,000 bis 31,000 g/mol,
B) 5 bis 40 Gew.-Teile, bevorzugt 7 bis 30 Gew.-Teile, insbesondere 10 bis 20 Gew.-Teile eines im Massepolymerisationsverfahren hergestellten Pfropfpolymeren aus mindestens einem Acrylnitril und/oder Methacrylnitril - im Folgenden (Meth)Acrylnitril -, weiterhin Butadien und mindestens einem Styrolmonomeren mit einem Butadiengehalt von 11 bis 14 Gew.-% bezogen auf das Pfropfpolymere und einem Gehalt an (Meth)Acrylnitril von 15 bis 30 Gew.-%, bevorzugt von 18 bis 27 Gew.-%, insbesondere von 21 bis 26 Gew.-% bezogen auf die Summe aus (Meth)Acrylnitril und Styrolmonomer im Pfropfpolymeren, wobei dieses Pfropfpolymer Styrol-(Meth)Acrylnitril-Copolymer mit einem gewichtsgemittelten Molekulargewicht M̅_{w} von 50.000 bis 140.000, bevorzugt von 60.000 bis 130.000, insbesondere von 60.000 bis 110.000 g/mol enthält,
C) 0 bis 20 Gew.-Teile, bevorzugt 2 bis 18 Gew.-Teile, insbesondere 8 bis 16 Gew.-Teile einer halogenfreien Phosphorverbindung, bevorzugt eines oligomeren organischen Phosphorsäureesters, insbesondere eines solchen auf Basis von Bisphenol-A und dessen Derivate,
D) 0 bis 1 Gew.-Teile, bevorzugt 0,1 bis 0,5 Gew.-Teile, insbesondere 0,2 bis 0,5 Gew.-Teile fluoriertes Polyolefin, welches bevorzugt in Form eines Masterbatches, eines Präcompounds oder einer Cofällung aus PTFE und einem Vinylmomonor-enthaltenden Polymers eingebracht wird,
E) - 0 bis 5 Gew.-Teile, bevorzugt 0,1 bis 3 Gew.-Teile, insbesondere 0,5 bis 2 Gew.-Teile eines ein Acrylatmonomer enthaltenden Polymers, bevorzugt eines Pfropfpolymerisats aus 10-90 Gew.-%, bevorzugt 30-80 Gew.-%, insbesondere 50-80 Gew.-% bezogen auf das Pfropfpolymerisat eines teilchenförmigen Polymerisats mit einer Glasübergangstemperatur unter 0°C, bevorzugt unter -20°C, insbesondere unter -40°C als Pfropfgrundlage und 90 bis 10 Gew.-%, bevorzugt 70 bis 20 Gew.-%, insbesondere 50 bis 20 Gew.-% bezogen auf das Pfropfpolymerisat einer Pfropfhülle aus Vinylmonomeren, die einen Anteil von mindestens 40 Gew.-%, bezogen auf die Pfropfhülle, bevorzugt von mindestens 60 Gew.-%, insbesondere von mindestens 80 Gew.-% an Acrylatmonomeren aufweist, wobei als Pfropfgrundlage ein Polybutadien- oder ein Silikon- oder ein Silikon-Acrylat-Kompositkautschuk besonders bevorzugt ist,
F) 0 bis 3 Gew.-Teile, bevorzugt 0,1 bis 2 Gew.-Teile, insbesondere 0,2 bis 1,5 Gew.-Teile anorganisches Material mit einem mittleren größten Partikeldurchmesser von maximal 1000 nm, bevorzugt von maximal 500 nm, insbesondere von maximal 200 nm und
G) bis zu 10 Gew.-Teile, bevorzugt bis zu 5 Gew.-Teile, insbesondere bis zu 2 Gew.-Teile handelsüblicher Polymeradditive.

Die Summe der Gewichtsteile aller Komponenten ist dabei auf 100 normiert.

Die Komponenten der erfindungsgemäßen Zusammensetzungen werden im Folgenden näher erläutert.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z.B. durch das Schmelzverfahren oder durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 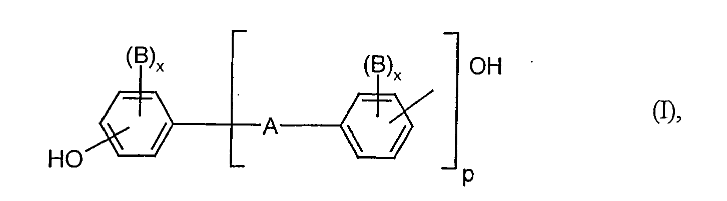 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 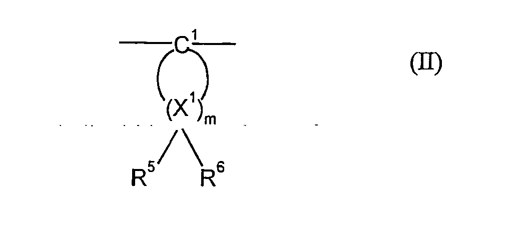 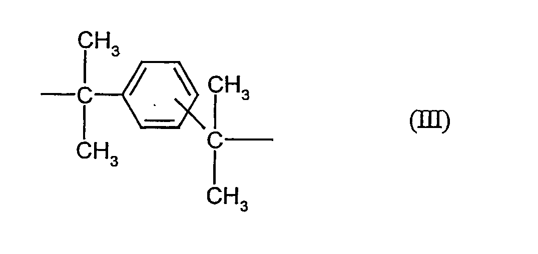
B jeweils C₁-C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁-C₆-Alkyl, vorzugsweise Wasserstoff, Methyl oder Ethyl,
X¹ Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-A 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

### Komponente B

Bei dem ABS-Polymerisat gemäß Komponente B handelt es sich um ein kautschukmodifiziertes Pfropfpolymerisat, in denen Styrol-Monomere gemäß B.1.1 und Acrylnitril und/oder Methacrylnitril gemäß B.1.2 in Anwesenheit eines Butadien-Kautschuks B.2 polymerisiert werden, wobei die Herstellung von B in bekannter Weise nach einem Masse- oder Masse-Suspensions-Polymerisationsverfahren erfolgt, wie z.B. in den US-A 3 243 481, US-A 3 509 237, US-A 3 660 535, US-A 4 221 833 und US-A 4 239 863 beschrieben.

Beispiele für Styrol-Monomere B.1.1 sind Styrol, α-Methylstyrol, halogen- oder alkylkernsubstituierte Styrole wie p-Methylstyrol, p-Chlorstyrol. Monomere gemäß B.1.2 sind Acrylnitril und/oder Methacrylnitril.

Bevorzugte Monomere B.1.1 sind Styrol und α-Methylstyrol, bevorzugtes Monomer B.1.2 ist Acrylnitril. Besonders bevorzugte Monomere sind B.1.1 Styrol und B.1.2 Acrylnitril.

Für die kautschukmodifizierten Pfropfpolymerisate B geeignete Kautschuke B.2 sind Butadienkautschuke. Butadienkautschuke im Sinne der vorliegenden Erfindung sind solche auf Basis von Butadien, die optional bis zu 50 Gew.-%, bevorzugt bis zu 30 Gew.-%, insbesondere bis zu 20 Gew.-% bezogen auf den Kautschuk copolymerisierbare Monomeren (z.B. gemäß B.1.1 und B.1.2) enthalten können, unter der Maßgabe, dass die Glasübergangstemperatur der Komponente B.2 unterhalb 10°C, vorzugsweise unterhalb -10°C, insbesondere unterhalb -20°C liegt. Besonders bevorzugt ist reiner Polybutadienkautschuk sowie Butadien/Styrol-Copolymer-Kautschuk.

Der Gehalt der Pfropfgrundlage (Kautschuk) in der Komponente B beträgt 11 bis 14 Gew.-% bezogen auf B. Bei kleineren Kautschukgehalten wird kein ausreichendes Zähigkeitsniveau, bei größeren Gehalten keine ausreichende Schmelzefließfähigkeit erhalten. Der Gehalt an Acrylnitril und/oder Methacrylnitril gemäß B.1.2 in B beträgt 15 bis 30 Gew.-%, bevorzugt 18 bis 27 Gew.-%, insbesondere 21 bis 26 Gew.-% bezogen auf die Summe aus B.1.2 und Styrolmonomer B.1.1 im Pfropfpolymeren B.

Die Komponente B kann zusätzlich noch geringe Mengen, üblicherweise weniger als 5 Gew.-%, vorzugsweise weniger als 2 Gew.-%, bezogen auf B.2, vernetzend wirkender ethylenisch ungesättigter Monomeren enthalten. Beispiele für solche vernetzend wirkende Monomere sind Alkylendiol-di-(meth)-acrylate, Polyester-di-(meth)-acrylate, Divinylbenzol, Trivinylbenzol, Triallylcyanurat, Allyl-(meth)-acrylat, Diallylmaleat und Diallylfumarat.

Das statistische Copolymerisat aus Styrolmonomer B.1.1 und Monomer B.1.2 liegt üblicherweise im Polymerisat B zu einem Teil auf dem Kautschuk B.2 auf- oder eingepfropft vor, wobei dieses Pfropfmischpolymerisat diskrete Teilchen im statistischen Copolymerisat aus B.1.1 und B.1.2 ausbildet. Das gewichtsgemittelte Molekulargewicht des freien, d.h. eluierbaren statistischen Copolymerisats kann mittels Gelpermeationschromatographie (GPC) bestimmt werden und liegt in den erfindungsgemäßen Komponenten B zwischen 5-10⁴ bis 14·10⁴ , bevorzugt zwischen 6·10⁴ bis 13·10⁴, insbesondere zwischen 6·10⁴ bis 11·10⁴g/mol.

Der mittlere Teilchendurchmesser der resultierenden gepfropften Kautschukteilchen (ermittelt durch Auszählung an elektronenmikroskopischen Aufnahmen) liegt im Bereich von 0,5 bis 5 µm, vorzugsweise von 0,8 bis 2,5 µm.

### Komponente C

Als halogenfreie Flammschutzmittel bevorzugt in Frage kommende Phosphorverbindungen sind ausgewählt aus der Gruppe der monomeren oder oligomeren Phosphor- bzw. Phosphonsäureester, Phosphonataminen und Phosphazenen.

Bevorzugt kommen oligomere Phosphor- bzw. Phosphonsäureester der allgemeinen Formel (IV) 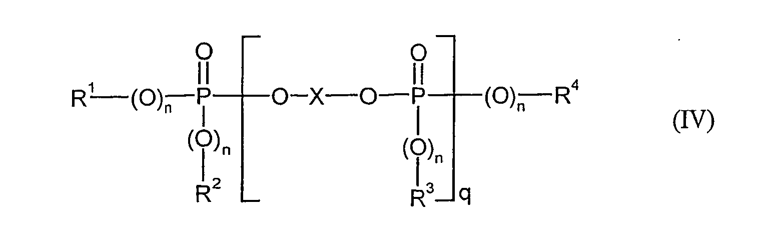 zum Einsatz, worin
- R¹, R², R³ und R⁴,: unabhängig voneinander jeweils C₁ bis C₈-Alkyl, jeweils gegebenenfalls durch Alkyl, vorzugsweise C₁ bis C₄-Alkyl, substituiertes C₅ bis C₆ Cycloalkyl, C₆ bis C₂₀ -Aryl oder C₇ bis C₁₂-Aralkyl,
- n: unabhängig voneinander, 0 oder 1,
- q: 0,5 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.
Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Alkylgruppen, vorzugsweise C₁ bis C₄-Alkyl substituiert sein. Besonders bevorzugte Aryl-Reste sind Kresyl, Phenyl, Xylenyl, Propylphenyl oder Butylphenyl.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

- n: in der Formel (IV) kann, unabhängig voneinander, 0 oder 1 sein, vorzugsweise ist n gleich 1.
- q: steht für Werte von 0,5 bis 30, vorzugsweise 0,8 bis 15, besonders bevorzugt 1 bis 5, insbesondere 0,8 bis 2.
- X: steht besonders bevorzugt für 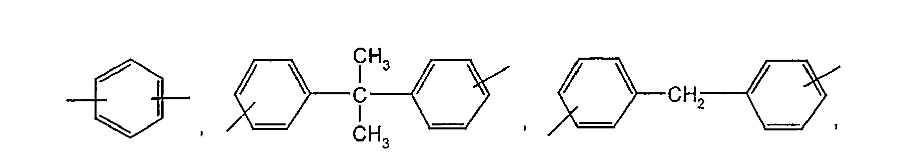 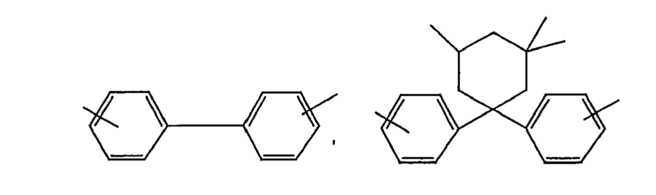 insbesondere leitet sich X von Resorcin, Hydrochinon, Bisphenol A oder Diphenylphenol ab. Besonders bevorzugt leitet sich X von Bisphenol A ab.

Insbesondere bevorzugte phosphorhaltige Verbindungen sind Verbindungen der Formel (IVa) 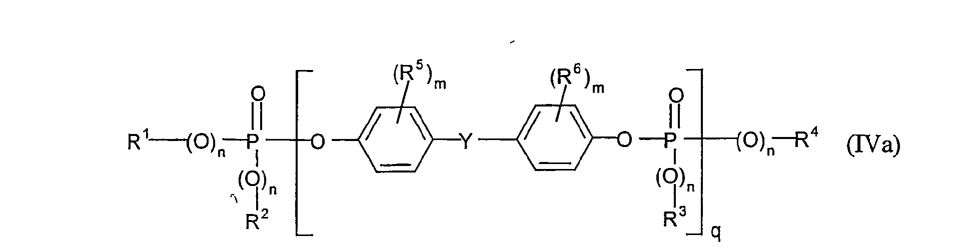 wobei
- R¹, R², R³, R⁴, n und q: die bei der Formel (IV) angegebene Bedeutung haben,
- m: unabhängig voneinander 0, 1, 2, 3 oder 4,
- R⁵ und R⁶: unabhängig voneinander C₁ bis C₄-Alkyl, vorzugsweise Methyl oder Ethyl und
- Y: C₁ bis C₇-Alkyliden, C₁-C₇-Alkylen, C₅ bis C₁₂-Cycloalkylen, C₅ bis C₁₂-Cycloalkyliden, -O-, -S-, -SO₂ oder -CO-, vorzugsweise Isopropyliden oder Methylen, bedeuten.

Besonders bevorzugt ist 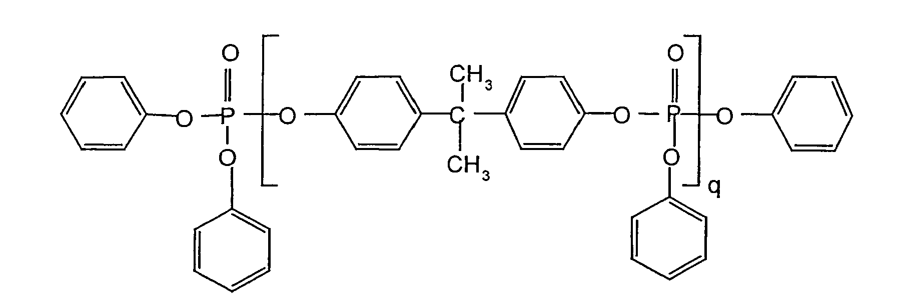 mit q = 0,8 bis 1,5.

Die Phosphorverbindungen gemäß Komponente C sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

### Komponente D

Die Flammschutzmittel entsprechend Komponente C werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen von Pfropfpolymerisaten oder (Co)polymerisaten auf Vinylmonomer-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit einem Pfropfpolymerisat oder einem Copolymerisat, vorzugsweise auf Vinylmonomer-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Methylmethacrylat und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertern Polyolefin von 5 bis 95 Gew.-%, vorzugsweise 7 bis 80 Gew.-%.

Die fluorierten Polyolefine kommen in Konzentration von 0 bis 1 Gew.-Teilen, bevorzugt von 0,1 bis 0,5 Gew.-Teilen, insbesondere 0,2 bis 0,5 Gew.-Teilen zum Einsatz, wobei sich diese Mengenangaben bei Einsatz eines Koagulats, Präcompounds oder Masterbatches auf das reine fluorierte Polyolefin beziehen.

### Komponente E

Als Komponente E kommen alle (Co)Polymere enthaltend (Meth)Acrylsäure-C₁-C₈-alkylester wie Methylmethacrylat, n-Butylacrylat, t-Butylacrylat in Frage, die ggf. Styrol-Monomere wie Styrol, α-Methylstyrol, halogen- oder alkylkernsubstituierte Styrole wie p-Methylstyrol, p-Chlorstyrol und Kautschuke enthalten können. Der Anteil an (Meth)Acrylsäure-C₁-C₈-alkylester in Komponente E beträgt vorzugsweise größer 10 Gew.-%, bevorzugt größer 20 Gew.-%.

Bevorzugte Acrylatverbindung in Komponente E ist Methylmethacrylat.

Insbesondere kommen als Komponente E Pfropfpolymerisate aus 10-90 Gew.-%, bevorzugt 30-80 Gew.-%, insbesondere 50-80 Gew.-% bezogen auf das Pfropfpolymerisat eines teilchenförmigen Polymerisats mit einer Glasübergangstemperatur unter 0°C, bevorzugt unter -20°C, insbesondere unter -40°C als Pfropfgrundlage und 90 bis 10 Gew.-%, bevorzugt 70 bis 20 Gew.-%, insbesondere 50 bis 20 Gew.-% bezogen auf das Pfropfpolymerisat einer Pfropfhülle aus Vinylmonomeren, die einen Anteil von mindestens 40 Gew.-%, bezogen auf die Pfropfhülle, bevorzugt von mindestens 60 Gew.-%, insbesondere von mindestens 80 Gew.-% an (Meth)Acrylsäure-C₁-C₈-alkylester wie Methylmethacrylat, n-Butylacrylat, t-Butylacrylat aufweist. Besonders bevorzugt kommt als (Meth)Acrylsäure-C₁-C₈-alkylester in der Pfropfhülle das Methylmethacrylat in Frage.

Für diese Pfropfpolymerisate geeignete Pfropfgrundlagen sind beispielsweise Dienkautschuke, EP(D)M-Kautschuke, also solche auf Basis Ethylen/Propylen und gegebenenfalls Dien-Verbindungen, weiterhin Acrylat-, Polyurethan-, Silikon-, Chloropren- und Ethylen/Vinylacetat-Kautschuke sowie Silikon-Acrylat-Kompositkautschuke.

Bevorzugt sind Dienkautschuke, Silikonkautschuke und Silikon-Acrylat-Kompositkautschuke. Besonders bevorzugt sind Silikon-Acrylat-Kompositkautschuke.

Dienkautschuke im Sinne der vorliegenden Erfindung sind z. B. solche auf Basis von beispielsweise Butadien oder Isopren oder Copolymerisate hieraus mit weiteren copolymerisierbaren Monomeren. Bevorzugte copolymerisierbare Monomere sind Vinylmonomere ausgewählt aus der Gruppe der Vinylaromaten, kernsubstituierten Vinylaromaten (wie beispielsweise Styrol, α-Methylstyrol, p-Methylstyrol), Methacrylsäure-(C₁-C₈)-Alkylester, (wie Methylmethacrylat, Ethylmethacrylat), Acrylsäure-(C₁-C₈)-Alkylester (wie n-Butylacrylat und tert.-Butylacrylat oder Mischungen hieraus), Vinylcyanide (ungesättigte Nitrile wie Acrylnitril und Methacrylnitril) und Derivate ungesättigter Carbonsäuren wie Anhydride und Imide (beispielsweise Maleinsäureanhydrid und N-Phenyl-Maleinimid), besonders bevorzugt ist Styrol mit einem bevorzugten Anteil von bis zu 30 Gew.-% bezogen auf den Dienkautschuk.

Besonders bevorzugt ist reiner Polybutadienkautschuk.

Diese Pfropfgrundlagen haben im Allgemeinen eine mittlere Teilchengröße (d₅₀-Wert) von 0,05 bis 5 µm, vorzugsweise 0,1 bis 2 µm, insbesondere 0,1 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Der Gelanteil dieser Pfropfgrundlagen beträgt mindestens 30 Gew.-%, vorzugsweise mindestens 40 Gew.-% (in Toluol gemessen).

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Besonders bevorzugt als Pfropfgrundlage sind für die Pfropfpolymere auch solche Acrylatkautschuke, Silikonkautschuke oder Silikonacrylatkompositkautschuke geeignet enthaltend 0 bis 100 Gew.-%, bevorzugt 1 bis 99 Gew.-%, insbesondere 10 bis 99 Gew.-%, besonders bevorzugt 30 bis 99 Gew.-% Polyorganosiloxan-Komponente und 100 bis 0 Gew.-%, bevorzugt 99 bis 1 Gew.-%, insbesondere 90 bis 1 Gew.-%, besonders bevorzugt 70 bis 1 Gew.-% Polyalkyl(meth)acrylat-KautschukKomponente (die Gesamtmenge der jeweiligen Kautschukkomponente ergibt 100 Gew.-%).

Derartige Kautschuke haben vorzugsweise einen mittleren Teilchendurchmesser von 0,01 bis 0,6 µm.

Als bevorzugte Silikonacrylatkautschuke kommen solche zum Einsatz, deren Herstellung in der JP 08 259 791-A, JP 07 316 409-A und EP-A 0 315 035 beschrieben werden. Die diesbezüglichen Inhalte dieser Anmeldungen werden hiermit in diese Anmeldung übernommen.

Die Polyorganosiloxan-Komponente im Silikonacrylat-Kompositkautschuk kann durch Umsetzung eines Organosiloxans und eines multifunktionalen Vemetzungsmittels in einem Emulsionspolymerisationsprozess hergestellt werden. Es ist weiterhin möglich, über Zusatz geeigneter ungesättigter Organosiloxane pfropfaktive Stellen in den Kautschuk einzufügen.

Das Organosiloxan ist im Allgemeinen cyclisch, wobei die Ringstrukturen bevorzugt 3 bis 6 Si-Atome enthalten. Beispielhaft seien genannt Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan, Octaaphenylcyclotetrasiloxan, welche allein oder in Mischung von 2 oder mehr Verbindungen eingesetzt werden können. Die Organosiloxankomponente sollte am Aufbau des Silikonanteils im Silikonacrylatkautschuk zu mindestens 50 Gew.-%, bevorzugt mindestens 70 Gew.-% bezogen auf den Silikonanteil im Silikonacrylatkautschuk beteiligt sein.

Als Vernetzungsmittel werden im Allgemeinen 3- oder 4-funktionelle Silanverbindungen eingesetzt. Beispielhaft hierfür seien als besonders bevorzugt genannt: Trimethoxymethylsilan, Triethoxyphenylsilan, Tetramethoxysilan, Tetraethoxysilan, Tetra-n-propoxysilan, Tetrabutoxysilan. 4 funktionelle Verzweigungsmittel, insbesondere Tetraethoxysilan. Die Menge an Verzweigungsmittel beträgt im Allgemeinen 0 bis 30 Gew.-% (bezogen auf die Polyorganosiloxankomponente im Silikonacrylatkautschuk).

Zum Einbringen pfropfaktiver Stellen in die Polyorganosiloxankomponente des Silikonacrylatkautschuks kommen bevorzugt Verbindungen zum Einsatz, die eine der folgenden Strukturen bilden:

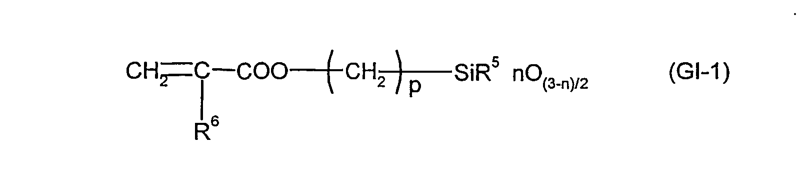

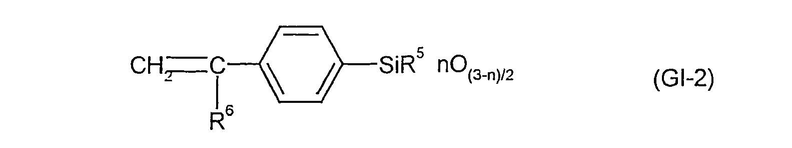

CH₂=CH-SiR⁵ nO_{(3-n)/2} (GI-3)

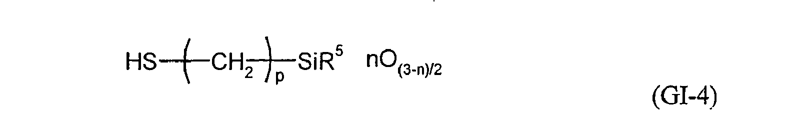

wobei
- R⁵: Methyl, Ethyl, Propyl oder Phenyl,
- R⁶: Wasserstoff oder Methyl,
- n: 0, 1 oder 2 und
- p: eine Zahl von 1 bis 6
bedeuten.

(Meth)acryloyloxysilan ist eine bevorzugte Verbindung zur Bildung der Struktur (GI 1). Bevorzugte (Meth)acryloyloxysilane sind beispielsweise β-Methacryloyloxyethyl-dimethoxy-methyl-silan, γ-Methacryloyl-oxy-propylmethoxy-dimethyl-silan, γ-Methacryloyloxypropyl-dimethoxy-methyl-silan, γ-Methacryloyloxypropyl-trimethoxy-silan, γ-Methacryloyloxy-propyl-ethoxy-diethyl-silan, γ-Methacryloyloxypropyldiethoxy-methyl-silan, γ-Methacryloyloxy-butyl-diethoxy-methyl-silan.

Vinylsiloxane, insbesondere Tetramethyl-tetravinyl-cyclotetrasiloxan sind fähig die Sturktur GI-2 zu bilden.

Beispielsweise p-Vinylphenyl-dimethoxy-methylsilan kann Struktur GI-3 bilden. γ-Mercaptopropyldimethoxy-methylsilan, γ-Mercaptopropylmethoxy-dimethylsilan, γ-mercaptopropyldiethoxymethylsilan usw. können Struktur (GI-4) bilden.

Die Menge an diesen Verbindungen beträgt 0 bis 10, vorzugsweise 0,5 bis 5 Gew.-% (bezogen auf die Polyorganosiloxankomponente).

Die Acrylat-Komponente im Silikonakrylat-Kompositkautschuk kann aus Alkyl-(meth)acrylaten, Vernetzungsmitteln und pfropfak-tiven Monomereinheiten hergestellt werden.

Als Alkyl(meth)acrylate seien beispielhaft und bevorzugt genannt Alkylacrylate wie Methylacrylat, Ethylacrylat, n-Propylacrylat, n-Butylacrylat, 2-Ethylhexylacrylat und Alkylmethacrylate wie Hexylmethacrylat, 2-Ethylhexyhnetliacrylat, n-Laurylmethacrylat und in besonders bevorzugter Weise n-Butylacrylat.

Als Vernetzungsmittel kommen multifunktionelle Verbindungen zum Einsatz. Es seien beispielhaft hierfür genannt: Ethylenglycoldimethacrylat, Propylenglycoldimethacrylat, 1,3-Butylenglycoldimethacrylat und 1,4-Butylenglykoldimethacrylat.

Zum Einfügen pfropfaktiver Stellen kommen beispielsweise folgende Verbindungen, allein oder in Mischung, zum Einsatz: Allylmethacrylat, Triallylcyanurat, Triallylisocyanurat, Allylmethacrylat. Allylmethacrylat kann auch als Vernetzungsmittel fungieren. Diese Verbindungen werden in Mengen von 0,1 bis 20 Gew.-%, bezogen auf die Acrylatkautschuk-Komponente im Silikonacrylat-Kompositkautschuk eingesetzt.

Methoden zur Herstellung der bevorzugt in den erfindungsgemäßen Zusammensetzungen eingesetzten Silikonacrylatkompositkautschuke sowie dessen Pfropfung mit Monomeren werden beispielsweise beschrieben in US-A 4 888 388, JP 08 259 791 A2, JP 07 316 409A und EP-A 0 315 035. Als Pfropfgrundlage für das Pfropfpolymer kommen sowohl solche Silikonacrylat-Kompositkautschuke in Frage, deren Silikon- und Acrylatkomponenten eine Kern-Schale-Strulctur bilden, als auch solche, die ein Netzwerk bilden, in denen Acrylat- und Silikonkomponente völlig miteinander durchdrungen sind ("interpenetrating network").

Die Pfropfpolymerisation auf die zuvor beschriebenen Pfropfgrundlagen kann in Suspension, Dispersion oder Emulsion durchgeführt werden. Bevorzugt ist die kontinuierliche oder diskontinuierliche Emulsionspolymerisation. Diese Pfropfpolymerisation wird mit Radikalinitiatoren durchgeführt (z.B. Peroxiden, Azoverbindungen, Hydroperoxiden, Persulfaten, Perphosphaten) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Pfropfmonomeren wird an den Kautschuk chemisch gebunden. Besonders bevorzugt sind mittels Emulsionspolymerisation hergestellte Pfropfpolymerisate gemäß Komponente E)

### Komponente F

Die erfindungsgemäß zum Einsatz kommenden feinstteiligen anorganischen Pulver F bestehen vorzugsweise aus wenigstens einer polaren Verbindung von einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe, oder aus Verbindungen dieser Metalle mit wenigstens einem Element ausgewählt aus Sauerstoff, Wasserstoff, Schwefel, Phosphor, Bor, Kohlenstoff, Stickstoff oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugt bestehen die feinstteiligen anorganischen Pulver aus Oxiden, Phosphaten, Hydroxiden, vorzugsweise aus TiO₂, SiO₂, SnO₂, ZnO, ZnS, Böhmit, ZrO₂, Al₂O₃, Aluminiumphosphate, Eisenoxide, ferner TiN, WC, AlO(OH), Sb₂O₃, Eisenoxide, NaSO₄ Vanadianoxide, Zinkborat, Silicate wie Al-Silikate, Mg-Silikate, ein-, zwei-, dreidimensionale Silikate. Mischungen und dotierte Verbindungen sind ebenfalls verwendbar.

Des weiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Besonders bevorzugt sind hydrathaltige Aluminiumoxide, wie Böhmit, Talk oder TiO₂.

Die durchschnittlichen größten Teilchendurchmesser der feinteiligen anorganischen Materialien sind kleiner gleich 1000 nm, bevorzugt kleiner gleich 500 nm, insbesondere kleiner gleich 200 nm.

Die anorganischen Verbindungen können als Pulver, Pasten, Sole Dispersionen oder Suspensionen vorliegen. Durch Ausfällen können aus den Dispersionen, Solen oder Suspensionen Pulver erhalten werden.

### Komponente G

Die erfindungsgemäßen Zusammensetzungen können weiterhin bis zu 10 Gew.-Teile, bevorzugt bis 5 Gew.-Teile, insbesondere bis 2 Gew.-Teile wenigstens eines üblichen Polymeradditivs wie Gleit- und Entformungsmittel, beispielsweise Pentaerythrittetrastearat, Nukleiermittel, Antistatikum, Stabilisator, Lichtschutzmittel, Hydrolysestabilisator, Füll- oder Verstärkungsstoff, Farbstoff oder Pigment sowie ein weiteres Flammschutzmittel oder einen Flammschutzsynergisten enthalten.

Alle Gewichtsteil-Angaben in dieser Anmeldung sind so normiert, dass die Summe der Gewichtsteile aller Komponenten in der Zusammensetzung gleich 100 gesetzt wird.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Zusammensetzungen.

Die erfindungsgemäßen Zusammensetzungen können zur Herstellung von Formteilen jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Gegenstand der Erfindung sind daher auch die aus der erfindungsgemäßen Zusammensetzung erhältlichen Formteile.

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer, Notebooks und Mobiltelefone; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Fonnteilen verwendet werden:

Innenausbauteile für Schienenfahrzeuge, Schiffe, Flugzeuge, Busse und Automobile, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, flächige Wandelemente, Gehäuse für Sicherheitseinrichtungen, Heckspoiler, Karosserieteile und Innenteile für Kraftfahrzeuge, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die folgenden Beispiele dienen der weiteren Erläuterung der Erfindung.

### Beispiele

### Komponente A1

Lineares Polycarbonat auf Basis Bisphenol-A mit einem gewichtsgemittelten Molekulargewicht M̅_{w} von 26.000 g/mol (bestimmt durch GPC).

### Komponente A2

Lineares Polycarbonat auf Basis Bisphenol-A mit einem gewichtsgemittelten Molekulargewicht M̅_{W} von 27.000 g/mol (bestimmt durch GPC).

### Komponente B1

Durch Masse-Polymerisation hergestelltes ABS-Pfropfpolymerisat mit einem A/B/S-Gewichtsverhältnis von 20%/13%/67% enthaltend SAN mit einem gewichtsgemittelten Molekulargewicht M̅_{w} von 80.000 g/mol (bestimmt durch GPC).

### Komponente B2

Durch Masse-Polymerisation hergestelltes ABS-Pfropfpolymerisat mit einem A/B/S-Gewichtsverhältnis von 20%/15%/65% enthaltend SAN mit einem gewichtsgemittelten Molekulargewicht M̅_{W} von 170.000 g/mol (bestimmt durch GPC).

### Komponente C

Bisphenol-A-verbrücktes Oligophosphat (BDP)

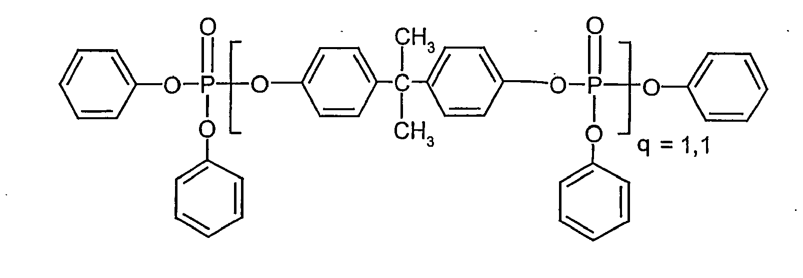

### Komponente D

Blendex 449: PTFE-Präparat der Fa. General Electric Plastics aus 50 Gew.-% PTFE und 50 Gew.-% SAN-Copolymer.

### Komponente E

Paraloid^{®} EXL2600: MBS (Methyl(meth)acrylat-gepfropfter Butadien-Styrol-Kautschuk mit einer Glasübergangstemperatur von -80°C der Fa. Rohm & Haas, Antwerpen, Belgien)

### Komponente F

Pural^{®} 200: nanoskaliges basisches Aluminiumoxid der Fa. Condea (Hamburg, Deutschland)

### Komponente G

Additive: **G1:** Pentaerythrittetrastearat (PETS)
**G2:** Phosphitstabilisator

### Herstellung und Prüfung der erfindungsgemäßen Formmassen

Das Mischen der Komponenten erfolgt auf einem Zweischneckenextruder (ZSK25) der Fa. Werner und Pfleiderer bei einer Massetemperatur von 240°C. Die Formkörper werden bei derselben Massetemperatur und einer Werkzeugtemperatur von 80°C auf einer Spritzgießmaschine Typ Arburg 270 E hergestellt.

Die Bestimmung der Kerbschlagzähigkeit aₖ wird gemäß ISO 180/1 A durchgeführt.

Die Beurteilung des Brandverhaltens der Proben erfolgt nach UL-Subj. 94 V an Stäben der Abmessung 127 x 12,7 x 1,5 mm.

Die Schmelzeviskosität wird bei 260°C und einer Scherrate von 1000 s⁻¹ gemäß DIN 54811 bestimmt.

Das Spannungsrissverhalten unter Chemikalieneinwirkung (ESC-Verhalten) wird an Stäben der Abmessung 80 mm x 10 mm x 4 mm untersucht. Als Testmedium wird eine Mischung aus 60 Vol.-% Toluol und 40 Vol.-% Isopropanol verwendet. Die Probekörper werden mittels einer Kreisbogenschablone vorgedehnt (Randfaserdehnung ε_{X} beträgt 3,2 %) und bei 23°C im Testmedium gelagert. Bestimmt wird die Zeit bis zum Bruch unter diesen Bedingungen.

Das Zeitstandverhalten (die Kriechfestigkeit) wird in einem Zugversuch an Schulterstäben der Abmessung 70mm x 40mm x 10mm bestimmt. Dabei werden die Stäbe bei 23°C einer konstanten Spannung von 50 MPa ausgesetzt und die Dehnung als Funktion der Zeit bis zum Bruchversagen detektiert. Als Maß für die Kriechfestigkeit dient die Zeit bis zum Bruchversagen unter diesen Bedingungen.

Die Hydrolysebeständigkeit wird beurteilt anhand des Anstiegs der Schmelzeflussrate (MVR) gemessen bei 240°C mit einer Stempellast von 5 kg gemäß ISO 1133 bei Lagerung von Granulat des Compounds für 100 h bei 80°C und einer relativen Luftfeuchtigkeit von 100 %. Da ein hydrolytischer Abbau des Polycarbonats in der Zusammensetzung zu einer Erhöhung des MVRs führt, ist es wünschenswert, den MVR-Anstieg möglichst gering zu halten.

Eine Zusammenstellung der Eigenschaften der erfindungsgemäßen Formmassen ist in Tabelle 1 gegeben.

Den Daten ist zu entnehmen, dass bei Verwendung des Masse-ABS-Typs 1 gegenüber derselben Zusammensetzung mit dem Masse-ABS-Typ 2 deutliche Verbesserungen in der Schmelzefließfähigkeit, der Kriechresistenz und der Spannungsrissbeständigkeit unter Chemikalieneinfluss bei unverändert guter Zähigkeit und Flammwidrigkeit resultieren (vgl. Beispiel 1 und Vergleichsbeispiel 1). Selbst bei Verwendung eines etwas höhermolekularen Polycarbonats sind gegenüber dem Vergleichsbeispiel bei weiteren Verbesserungen in Kriechresistenz und Spannungsrissbeständigkeit noch Vorteile in der Schmelzefließfähigkeit zu realisieren (s. Beispiel 3).

Durch Zusatz nanoskaliger Verbindungen lässt sich die Fließfähigkeit der Zusammensetzung erhöhen und insbesondere ihre Hydrolysebeständigkeit verbessern (vgl. Beispiele 1 und 2). Durch Zusatz von acrylathaltigen Pfropfpolymeren lässt sich die Kerbschlagzähigkeit deutlich erhöhen. Bei Beschränkung auf kleine Konzentrationen leiden dabei die anderen Eigenschaften nur geringfügig, so dass der bisherige Stand der Technik (Vergleichsbeispiel A) nach wie vor übertroffen wird (vgl. Beispiele 1, 4, 5 und 6).

Insbesondere kommt es durch Zusatz der acrylathaltigen Pfropfpolymere nicht zu einer Verschlechterung der Hydrolysebeständigkeit, wie sie bei Zusatz von Emulsions-ABS-Polymeren, die im bisherigen Stand der Technik zur Erhöhung der Kerbschlagzähigkeit herangezogen wurden, allgemein beobachtet wird.

**Tabelle 1: Formmassen und ihre Eigenschaften**

| | | A* | 1 | 2 | 3 | 4 | 5 | 6 |
|---|---|---|---|---|---|---|---|---|
| **Komponenten [Gew.-Teilel]** | | | | | | | | |
| A1 | PC1 | 68,9 | 68,9 | 69,5 | - | 68,9 | 68,9 | 68,9 |
| A2 | PC2 | - | - | - | 68,9 | - | - | - |
| B1 | Masse-ABS 1 | - | 16,4 | 16,6 | 16,4 | 15,9 | 15,4 | 14,4 |
| B2 | Masse-ABS 2 | 16,4 | - | - | - | | | |
| C | BDP | 12,5 | 12,5 | 12,6 | 12,5 | 12,5 | 12,5 | 12,5 |
| D | PTFE-SAN-Masterbatch | 0,8 | 0,8 | 0,8 | 0,8 | 0,8 | 0,8 | 0,8 |
| E | MBS | - | - | - | - | 0,5 | 1,0 | 2,0 |
| F | nanoskaliges anorg. Material | 0,9 | 0,9 | - | 0,9 | 0,9 | 0,9 | 0,9 |
| G1 | PETS | 0,4 | 0,4 | 0,4 | 0,4 | 0,4 | 0,4 | 0,4 |
| G2 | Phosphitstabilisator | 0,1 | 0,1 | 0,1 | 0,1 | 0,1 | 0,1 | 0,1 |
| **Eigenschaften** | | | | | | | | |
| Kriechfestigkeit-Zeit bis Zeitstandversagen [h] | | 8 | 13 | 15 | 15 | n.g | n.g. | n.g |
| Spannungrißbeständigkeit - Zeit bis Bruchversagen [min] | | 3 | 11 | 10 | 25 | 9 | 8 | 6 |
| Hydrolysebeständigkeit - MVR-Anstieg [%] | | n.g. | 17 | 47 | 19 | n.g. | n.g. | 19 |
| aₖ[kJ/m²] | | 11 | 12 | 13 | 14 | 14 | 15 | 32 |
| UL94V-Bewertung | | V-0 | V-0 | V-0 | V-0 | V-0 | V-0 | V-0 |
| Schmelzeviskosität [Pas] | | 164 | 135 | 144 | 152 | 141 | 147 | 152 |

| | | | | | | | | |
|---|---|---|---|---|---|---|---|---|
| * Vergleichsbeispiel n.g. = nicht gemessen | | | | | | | | |

## Patentansprüche

1. Zusammensetzungen enthaltend
A) 40 bis 95 Gew.-Teile aromatisches Polycarbonat oder Polyestercarbonat oder Mischungen hieraus,
B) 5 bis 40 Gew.-Teile eines im Masse-Polymerisationsverfahren hergestellten Pfropfpolymerisats aus Acrylnitril und/oder Methacrylnitril, Butadien und mindestens einem Styrolmonomeren,
C) 0 bis 20 Gew.-Teile einer halogenfreien Phosphorverbindung,
D) 0 bis 1 Gew.-Teile fluoriertes Polyolefin,
E) 0 bis 5 Gew.-Teile ein Acrylatmonomer enthaltendes Polymer und
F) 0 bis 3 Gew.-Teile eines feinteiligen anorganischen Materials mit einem mittleren größten Partikeldurchmesser von maximal 1000 nm
mit den Maßgaben,
(i) dass das Polycarbonat bzw. Polyestercarbonat ein gewichtsgemitteltes Molekulargewicht M_{w} zwischen 25,000 und 35,000 g/mol aufweist,
(ii) dass das Pfropfpolymerisat gemäß Komponente B) einen Butadiengehalt von 11 bis 14 Gew.-% bezogen auf das Pfropfpolymerisat und einen Gehalt an Acrylnitril und/oder Methacrylnitril von 15 bis 30 Gew.-% bezogen auf die Summe aus Acrylnitril und/oder Methacrylnitril und Styrolmonomer im Pfropfpolymerisat B besitzt und Styrolmonomer-(Meth)Acrylnitril-Copolymer mit einem gewichtsgemittelten Molekulargewicht M_{w} von 5·10⁴ bis 14·10⁴ g/mol enthält.

2. Zusammensetzung gemäß Anspruch 1, in denen das aromatische Polycarbonat oder Polyestercarbonat ein gewichtsgemitteltes Molekulargewicht M_{w} zwischen 26,000 und 31,000 g/mol aufweist.

3. Zusammensetzung gemäß Anspruch 1, in denen Komponente B) gebildet ist aus Acrylnitril, Butadien und Styrol.

4. Zusammensetzung gemäß Anspruch 1, in denen Komponente B) Styrol-(Meth)Acrylsäurenitril-Copolymer mit einem gewichtsgemittelten Molekulargewicht M_{w} zwischen 6·10⁴ bis 11·10⁴ g/mol enthält

5. Zusammensetzung gemäß Anspruch 1, in denen Komponente B) einen Gehalt an Acrylnitril und/oder Methacrylnitril von 21 bis 26 Gew.-% bezogen auf die Summe der Mengen aus Acrylnitril und/oder Methacrylnitril und Styrolmonomeren aufweist.

6. Zusammensetzung gemäß Anspruch 1 mit einem Gehalt an aromatischem Poly(ester)carbonat von 60 bis 80 Gew.-Teilen.

7. Zusammensetzung gemäß Anspruch 6 mit einem Gehalt an im Massepolymerisationsverfahren hergestellten Pfropfpolymeren B) von 10 bis 20 Gew.-Teilen.

8. Zusammensetzung gemäß Anspruch 1 mit einem Gehalt an halogenfreier Phosphorverbindung von 8 bis 16 Gew.-Teilen.

9. Zusammensetzung gemäß Anspruch 1 mit einem Gehalt an fluoriertem Polyolefin von 0,2 bis 0,5 Gew.-Teilen.

10. Zusammensetzung gemäß Anspruch 1 mit einem Gehalt an Acrylatmonomeren enthaltenden Polymer E) von 0,5 bis 2 Gew.-Teilen.

11. Zusammensetzung gemäß Anspruch 1 mit einem Gehalt an feinteiligen anorganischen Materialien von 0,2 bis 1,5 Gew.-Teilen.

12. Zusammensetzung gemäß Anspruch 1 enthaltend mindestens ein Additiv ausgewählt aus der Gruppe der Gleit- und Entformungsmittel, Nukleiermittel, Antistatika, Stabilisatoren, UV-Schutzmittel, Hydrolysestabilisatoren, Füll-und Verstärkungsstoffe, Flammschutzmittel und Synergisten sowie Farbstoffe und Pigmente.

13. Zusammensetzung gemäß Anspruch 1 enthaltend als halogenfreie Phosphorverbindung einen oligomeren organischen Phosphorsäureester der allgemeinen Formel 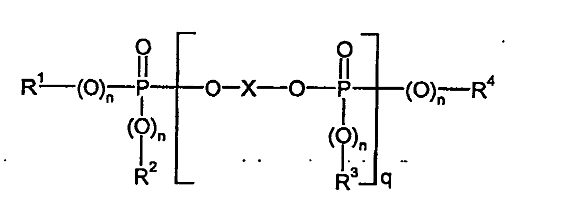 worin
R¹, R², R³ und R⁴, unabhängig voneinander jeweils C₁ bis C₈-Alkyl, jeweils gegebenenfalls durch Alkyl substituiertes C₅ bis C₆-Cycloalkyl, C₆ bis C₂₀-Aryl oder C₇ bis C₁₂-Aralkyl,
n unabhängig voneinander, 0 oder 1,
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

14. Zusammensetzung gemäß Anspruch 13, wobei X für 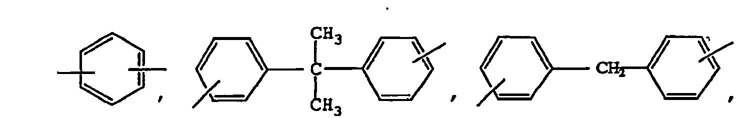 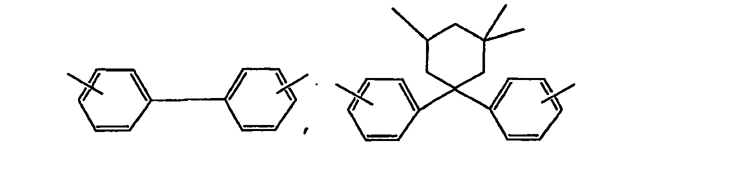 steht.

15. Zusammensetzung gemäß Anspruch 1, in denen das fluorierte Polyolefin in Form eines Masterbatches, eines Präcompounds oder einer Cofällung aus Polytetrafluorethylen und einem Vinylmonomer-enthaltendem Polymer eingebracht wird.

16. Zusammensetzung gemäß Anspruch 1, in denen das Acrylatmonomer enthaltende Polymere ein Pfropfpolymerisat aus
10 bis 90 Gew.% einer Mischung aus
0 bis 60 Gew.-% mindestens eines Vinylaromaten oder kernsubstituierten Vinylaromaten und
40 bis 100 Gew.-% mindestens eines Methacrylsäure-(C₁-C₈)-Alkylester oder Acrylsäure-(C₁-C₈)-Alkylester
auf
90 bis 10 Gew.-% einen oder mehrere Kautschuke mit Glasübergangstemperaturen <0°C.

17. Zusammensetzung gemäß Anspruch 16, in denen die Kautschukkomponente ausgewählt ist aus der Gruppe der Polybutadien-Kautschuke, Silikon-Kautschuke und Silikon-Acrylat-Kompositkautschuke.

18. Zusammensetzung gemäß Anspruch 1, in denen das feinteilige anorganische Material einen mittleren größten Partikeldurchmesser von maximal 200 nm besitzt.

19. Zusammensetzung gemäß Anspruch 1, die kein im Emulsions-Polymerisationsverfahren hergestelltes Acrylnitril-Butadien-Styrol-Copolymer enthält.

20. Formteile, erhältlich aus Zusammensetzungen gemäß Anspruch 1.

## Claims

1. Compositions containing
A) 40 to 95 parts by weight of aromatic polycarbonate or polyestercarbonate or mixtures thereof,
B) 5 to 40 parts by weight of a graft polymer produced by the mass polymerisation process from acrylonitrile and/or methacrylonitrile, butadiene and at least one styrene monomer,
C) 0 to 20 parts by weight of a halogen-free phosphorus compound,
D) 0 to 1 parts by weight fluorinated polyolefin,
E) 0 to 5 parts by weight of a polymer containing acrylate monomer and
F) 0 to 3 parts by weight of a fine-particle inorganic material with an average maximum particle diameter of no more than 1000 nm
provided that,
(i) the polycarbonate or polyestercarbonate has a weight average molecular weight M_{w} of 25,000 to 35,000 g/mol,
(ii) the graft polymer according to Component B) has a butadiene content of 11 to 14 wt.% in relation to the graft polymer and an acrylonitrile and/or methacrylonitrile content of 15 to 30 wt.% in relation to the sum of acrylonitrile and/or methacrylonitrile and styrene monomer in graft polymer B and contains styrene monomer-(meth)acrylonitrile copolymer with a weight average molecular weight M_{w} of 5·10⁴ to 14·10⁴ g/mol.

2. Composition according to claim 1, in which the aromatic polycarbonate or polyestercarbonate has a weight average molecular weight M_{w} of 26,000 to 31,000 g/mol.

3. Composition according to claim 1, in which Component B) is formed from acrylonitrile, butadiene and styrene.

4. Composition according to claim 1, in which Component B) contains styrene-(meth)acrylonitrile copolymer with a weight average molecular weight M_{w} of 6·10⁴ to 11·10⁴ g/mol.

5. Composition according to claim 1, in which Component B) contains 21 to 26 wt.% acrylonitrile and/or methacrylonitrile in relation to the sum of the quantities of acrylonitrile and/or methacrylonitrile and styrene monomers.

6. Composition according to claim 1 having a content of aromatic poly(ester)carbonate of 60 to 80 parts by weight.

7. Composition according to claim 6 having a content of graft polymer B) produced by the mass polymerisation process of 10 to 20 parts by weight.

8. Composition according to claim 1 containing 8 to 16 parts by weight of halogen-free phosphorus compound.

9. Composition according to claim 1 containing 0.2 to 0.5 parts by weight fluorinated polyolefin.

10. Composition according to claim 1 containing 0.5 to 2 parts by weight polymer E), which contains acrylate monomers.

11. Composition according to claim 1 containing 0.2 to 1.5 parts by weight fine-particle inorganic materials.

12. Composition according to claim 1 containing at least one additive selected from the group of mould lubricants and mould release agents, nucleation agents, antistatics, stabilisers, UV-protectors, hydrolysis stabilisers, fillers and reinforcing agents, flame-retardants and synergists and also dyes and pigments.

13. Composition according to claim 1 containing as halogen-free phosphorus compound an oligomeric organic phosphoric acid ester of the general formula 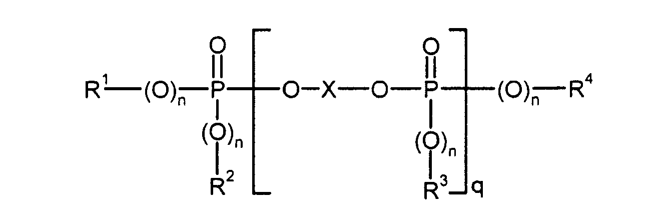 in which
R¹, R², R³ and R⁴, independently of each other are, in each case, C₁ to C₈-alkyl, C₅ to C₆-cycloalkyl in each case optionally substituted by alkyl, C₆ to C₂₀-aryl or C₇ to C₁₂-aralkyl,
n independently of each other, means 0 or 1,
q means 0 to 30 and
X means a mono- or polynuclear aromatic group having 6 to 30 C atoms or a linear or branched aliphatic group having 2 to 30 C atoms, which may be OH-substituted and may contain up to 8 ether bonds.

14. Composition according to claim 13, wherein X represents

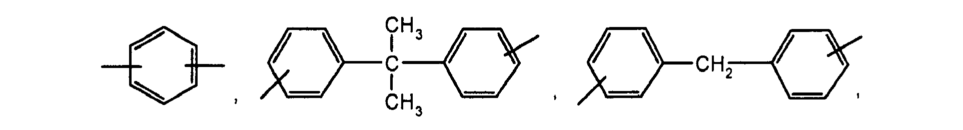

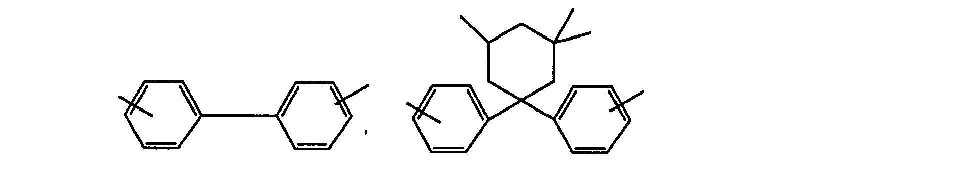

15. Composition according to claim 1, in which the fluorinated polyolefin is incorporated in the form of a master batch, a pre-compound or a co-precipitation of polytetrafluoroethylene and a vinyl monomer-containing polymer.

16. Composition according to claim 1, in which the polymer containing acrylate monomer is a graft polymer consisting of
10 to 90 wt.% of a mixture of
0 to 60 wt.% of at least one vinyl aromatic or core-substituted vinyl aromatic and
40 to 100 wt.% of at least one methacrylic acid-(C₁-C₈) -alkyl ester or acrylic acid-(C₁-C₈)-alkyl ester
on
90 to 10 wt.% of one or more rubbers with glass transition temperatures of <0°C.

17. Composition according to claim 16, in which the rubber component is selected from the group of polybutadiene rubbers, silicon rubbers and silicon-acrylate composite rubbers.

18. Composition according to claim 1, in which the fine-particle inorganic material has an average maximum particle diameter of no more than 200 nm.

19. Composition according to claim 1, which contains no acrylonitrile-butadiene-styrene copolymer produced by the emulsion-polymerisation process.

20. Moulded parts obtainable from the compositions according to claim 1.

## Revendications

1. Compositions contenant
A) 40 à 95 parties en poids d'un polycarbonate ou polyester-carbonate aromatique ou de leurs mélanges,
B) 5 à 40 parties en poids d'un polymère greffé de l'acrylonitrile et/ou du méthacrylonitrile, du butadiène et d'au moins un monomère styrénique, préparé par une technique de polymérisation en masse,
C) 0 à 20 parties en poids d'un dérivé phosphoré exempt d'halogènes,
D) 0 à 1 partie en poids d'une polyoléfine fluorée,
E) 0 à 5 parties en poids d'un polymère contenant un acrylate monomère et
F) 0 à 3 parties en poids d'une matière minérale en fines particules, à un diamètre de particule moyen de 1 000 nm au maximum,
sous réserve que :
i) le polycabonate ou polyester-carbonate a un poids moléculaire, moyenne en poids, M_{w}, qui va de 25 000 à 35 000 g/mol,
ii) le polymère greffé du composant B a une teneur en butadiène de 0 à 14 % de son poids et une teneur en acrylonitrile et/ou méthacrylonitrile de 15 à 30 % en poids, par rapport à la somme de l'acrylonitrile et/ou du méthacrylonitrile et du monomère styrénique contenus dans le polymère greffé B) et il contient un copolymère monomère styrénique-(méth)acrylonitrile ayant un poids moléculaire moyen, moyenne en poids, M_{w} de 5 × 10⁴ à 14 × 10⁴ g/mol.

2. Composition selon la revendication 1, dans laquelle le polycarbonate ou polyester-carbonate aromatique a un poids moléculaire moyen, moyenne en poids, M_{w} allant de 26 000 à 31 000 g/mol.

3. Composition selon revendication 1, dans laquelle le composant B) est constitué d'acrylonitrile, de butadiène et de styrène.

4. Composition selon revendication 1, dans laquelle le composant B) contient un copolymère styrène-(méth)acrylonitrile ayant un poids moléculaire moyen, moyenne en poids, M_{w} allant de 6 × 10⁴ à 11 × 10⁴ g/mol.

5. Composition selon revendication 1, dans laquelle le composant B) a une teneur en acrylonitrile et/ou méthacrylonitrile de 21 à 26 % en poids, par rapport à la somme des poids de l'acrylonitrile et/ou du méthacrylonitrile et du monomère styrénique.

6. Composition selon revendication 1, contenant le poly(ester)carbonate aromatique en quantité de 60 à 80 parties en poids.

7. Composition selon revendication 6, contenant un polymère greffé B préparé par une technique de polymérisation en masse en quantité de 10 à 20 parties en poids.

8. Composition selon revendication 1, contenant un composé phosphoré exempt d'halogène en quantité de 8 à 16 parties en poids.

9. Composition selon revendication 1, contenant une polyoléfine fluorée en quantité de 0,2 à 0,5 partie en poids.

10. Composition selon revendication 1, contenant un polymère E), contenant lui-même un acrylate monomère, en quantité de 0,5 à 2 parties en poids.

11. Composition selon revendication 1, contenant une matière minérale en fines particules en quantité de 0,2 à 1,5 partie en poids.

12. Composition selon revendication 1, contenant au moins un additif choisi dans le groupe des agents lubrifiants et agent de démoulage, des agents de nucléation, des agents antistatiques, des stabilisants, des agents protégeant contre les UV., des stabilisants contre l'hydrolyse, des matières de charge et matières renforçantes, des agents ignifugeants et synergistes, ainsi que des colorants et pigments.

13. Composition selon revendication 1, contenant en tant que composé phosphoré exempt d'halogène un ester phosphorique organique oligomère de formule générale 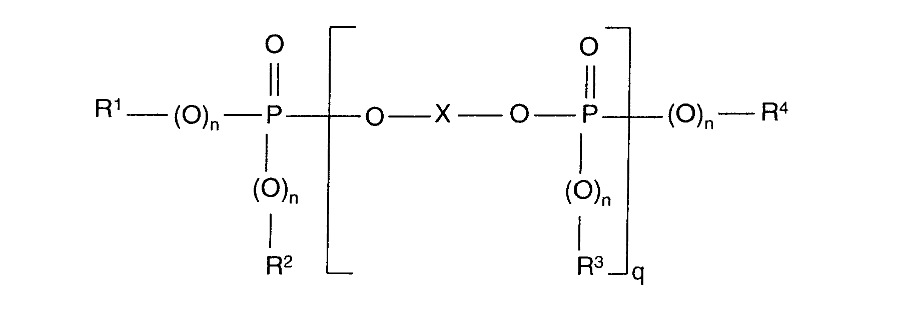 dans laquelle
R¹, R², R³ et R⁴ représentent chacun, indépendamment les uns des autres, un groupe alkyle en C₁-C₈ ou un groupe cycloalkyle en C₅-C₆, aryle en C₆-C₂₀ ou aralkyle en C₇-C₁₂, chacun d'eux éventuellement substitué par des groupes alkyle,
les indices n sont égaux chacun, indépendamment les uns des autres, à 0 ou 1,
q est un nombre allant de 0 à 30.
X représente un radical aromatique mono- ou poly-cyclique en C₆-C₃₀ ou un radial aliphatique linéaire ou ramifié en C₂-C₃₀ qui peut être substitué par des groupes OH et peut contenir jusqu'à 8 liaisons éther.

14. Composition selon revendication 13, dans laquelle X représente

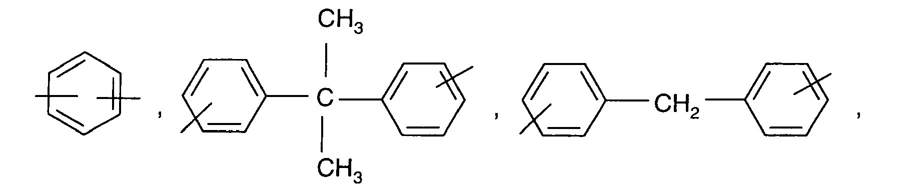

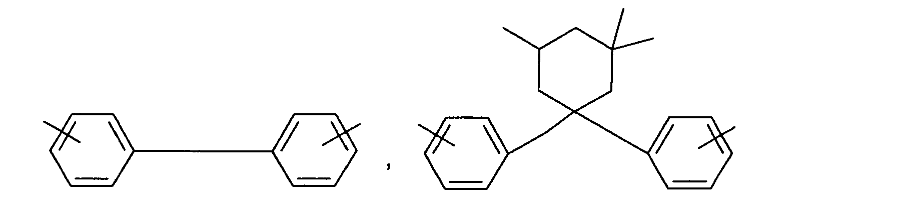

15. Composition selon revendication 1, dans laquelle la polyoléfine fluorée a été introduite à l'état d'un mélange-maître, d'un mélange préalable ou d'un co-précipité du polytétrafluoréthylène et d'un polymère contenant un monomère vinylique.

16. Composition selon revendication 1, dans laquelle le polymère contenant un acrylate monomère est un polymère greffé de
10 à 90 % en poids d'un mélange de
0 à 60 % en poids d'au moins un composé vinylaromatique ou un composé vinylaromatique substitué dans les noyaux et
40 à 100 % en poids d'au moins un méthacrylate d'alkyle en C₁-C₈ ou d'un acrylate d'alkyle en C₁-C₈, sur
90 à 10 % en poids d'un ou plusieurs caoutchoucs ayant des températures de transition du second ordre inférieures à 0°C.

17. Composition selon revendication 16, dans laquelle le composant caoutchouc est choisi dans le groupe des caoutchoucs de polybutadiène, des caoutchoucs de silicones et des caoutchoucs composites de silicone-acrylate.

18. Composition selon revendication 1, dans laquelle la matière minérale en fines particules a un diamètre de particule moyen maximum de 200 nm au maximum.

19. Composition selon revendication 1, ne contenant pas de copolymère acrylonitrile-butadiène-styrène préparé par une technique de polymérisation en émulsion.

20. Pièces moulées obtenues à partir de compositions selon revendication 1.
